# EUROPEAN PATENT APPLICATION

(11) **EP 4 707 168 A1**
(43) Date of publication of application: **11.03.2026**
(21) Application number: 25190957.8
(22) Date of filing: 22.07.2025
(51) Int. Cl.: B64C 11/26, F01D 5/14

(54) **AIRFOILS FOR GAS TURBINE ENGINES**

(30) Priority: 06.09.2024 US 202418827211
(71) Applicant: General Electric Company, Cincinnati, Ohio 45215 (US)
(72) Inventor: YADAV, Abhijeet Jayshingrao, Evendale, 45215 (US); KRAY, Nicholas, Evendale, 45215 (US); JAIN, Nitesh, Evendale, 45215 (US)
(74) Representative: Openshaw & Co.

(57) **Abstract**

An airfoil for a gas turbine engine. The airfoil includes an inner portion including a hollow fiber composite, and a surface portion including a solid fiber composite, the surface portion at least partially surrounding the inner portion.

## Description

### TECHNICAL FIELD

The present disclosure relates to airfoils (e.g., fan blades) for gas turbine engines, e.g., for an aircraft.

### BACKGROUND

Gas turbine engines include airfoils such as fan blades that rotate to accelerate air into the gas turbine engine.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic view of an aircraft having a gas turbine engine according to an embodiment of the present disclosure.
FIG. 2 is a cross-sectional view taken along line 2-2 in FIG. 1, of the gas turbine engine of the aircraft shown in FIG. 1.
FIG. 3A is a schematic, cross-sectional view of a first airfoil according to an embodiment of the disclosure.
FIG. 3B is a schematic, cross-sectional view taken along line 3B-3B in FIG. 3A, of the first airfoil depicted in FIG. 3A.
FIG. 4A is a schematic, cross-sectional view of a second airfoil according to an embodiment of the disclosure.
FIG. 4B is a schematic, cross-sectional view taken along line 4B-4B in FIG. 4A, of the second airfoil depicted in FIG. 4A.
FIG. 5A is a schematic, cross-sectional view of a solid reinforcing fiber according to an embodiment of the disclosure.
FIG. 5B is a schematic, cross-sectional view of a hollow reinforcing fiber according to an embodiment of the disclosure.
FIG. 6 is a schematic view of a laminated composite according to an embodiment of the disclosure.
FIG. 7 is a schematic view of a woven composite according to an embodiment of the disclosure.
FIG. 8 is a schematic view of a braided composite according to an embodiment of the disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

The terms "forward" and "aft" refer to relative positions within a gas turbine engine or vehicle and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows. The term "fluid" may be a gas or a liquid.

The terms "coupled," "fixed," "attached," "connected," and the like, refer to both direct coupling, fixing, attaching, or connecting as well as indirect coupling, fixing, attaching, or connecting through one or more intermediate components or features, unless otherwise specified herein.

The singular forms "a," "an," and "the" include plural references unless the context clearly dictates otherwise.

Here and throughout the specification and claims, range limitations may be combined and/or interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC). The composite may be formed of a matrix material and a reinforcing element, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. Adhesives can include resins including both thermoset resins and thermoplastic resins. Thermoset resins include, for example, epoxies, bismaleimides, urethanes, acrylics, and phenolics. These thermoset adhesive resins can be cured by using elevated temperatures or other hardening techniques. Adhesives may also include thermoplastic resins such as nylons, polyesters, urethanes, polyetherimides, and acrylics. These thermoplastic adhesive resins can melt and flow to create a mechanical lock with the mating surface.

As used herein, PMC refers to a class of materials. The PMC material may be a prepreg. A prepreg is a reinforcement material (e.g., a reinforcing fiber) pre-impregnated with a polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers. The prepregs can be in the form of unidirectional tapes or woven composites, which are then stacked on top of one another to create the number of stacked composite plies desired for the part.

Multiple layers of prepreg are stacked to the proper thickness and orientation for the composite component, and then the resin is cured and solidified to render a fiber reinforced composite part. Resins for matrix materials of PMCs can be generally classified as thermosets or thermoplastics. Thermoplastic resins are generally categorized as polymers that can be repeatedly softened and caused to flow when heated and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg with thermoplastic polymers, another non-limiting example utilizes a woven composite. Woven composites can include, but are not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system. The glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods including, but not limited to, melt infiltration, chemical vapor infiltration, polymer impregnation pyrolysis (PIP), or any combination thereof.

The term "metallic" as used herein is indicative of a material that includes metal such as, but not limited to, titanium, iron, aluminum, stainless steel, and nickel alloys. A metallic material or an alloy can be a combination of at least two or more elements or materials, where at least one is a metal.

As noted above, various components of a turbine engine may be manufactured using composites. Such composites may include laminates having a plurality of plies. The process of manufacturing the composite part may include laying up the plurality of plies as part of a process to form a preform. Laying up the plurality of plies may be a time-consuming process, particularly, when complex geometries, such as contoured or curved components are being formed. These complex geometries may thus require hand lay-up instead of automated processes. To facilitate the improved processing, the method discussed herein lays up the plurality of plies on a planar surface of a lay-up tool and selectively bonds portions of the plies to facilitate subsequent forming operations. The plurality of plies may be laid up by hand (i.e., hand lay-up) or using an automated process including an automated lay-up system. The automated lay-up system and corresponding automated process may be, for example, an Automated Tape Laying (ATL) system, an Automated Fiber Placement (AFP) system, a Thermoplastic Fiber/Tape Placement (TTP) system, a Pick-and-Place system, and the like. The lay-up process is preferably performed on a lay-up tool having a flat or a low-contour lay-up surface. The final preform (or shaped preform), however, will have regions that have a contour or a curvature that is greater than that of other regions. These regions will be referred to herein as high-contour regions and low-contour regions. In some embodiments, the low-contour regions may be flat, and additional details of these regions will be discussed further below.

Various components of a gas turbine engine may be manufactured using composites. Such components can include, for example, airfoils that direct airflow through the gas turbine engine and compress air, extract work form the air flowing through the engine, and produce thrust. The airfoils can include both static airfoils (or nozzles) and rotating airfoils like compressor blades, turbine blades, and fan blades. Airfoils, such as fan blades, are subjected to a variety of mechanical forces during normal use of the gas turbine engine. The airfoils like fan blades or compressor blades can also experience large impact forces when subjected to an adverse event such as a bird strike. As such, airfoils need to be suitably mechanically robust. Additionally, efficiency and performance of the gas turbine engine is impacted by various properties of the airfoils. The inventors unexpectedly discovered that airfoils including an inner portion including a hollow fiber composite, and a surface portion including a solid carbon fiber and solid glass fiber composite have robust mechanical properties suitable for use in gas turbine engines, while also providing enhanced efficiency as compared to other airfoils lacking, e.g., the inner portion including the hollow fiber composite.

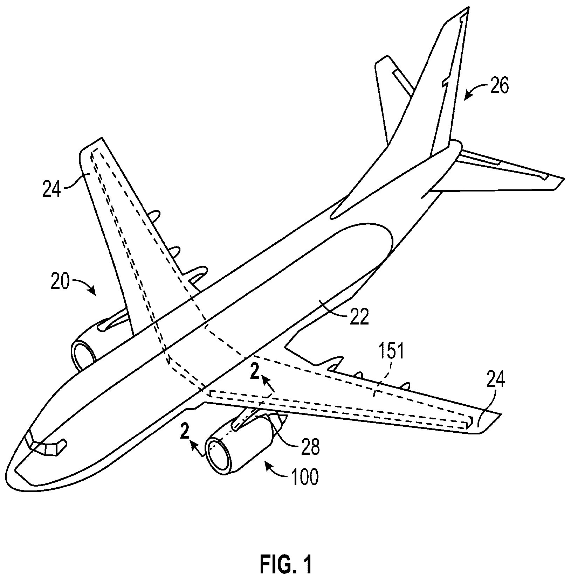

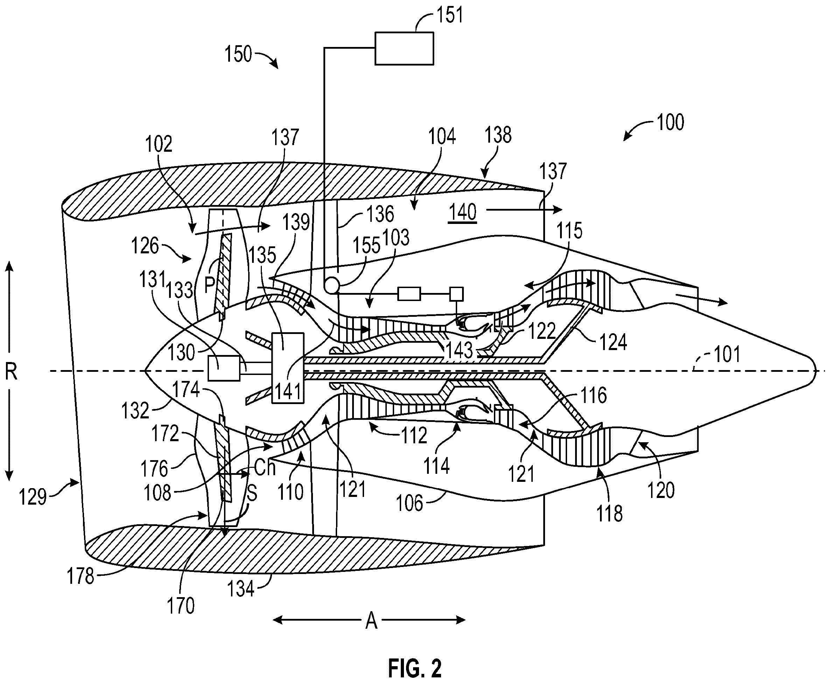

FIG. 1 shows an aircraft 20 that may implement various embodiments. The aircraft 20 includes a fuselage 22, wings 24 attached to the fuselage 22, and an empennage 26. The aircraft 20 also includes a propulsion system that produces a propulsive thrust required to propel the aircraft 20 in flight, during taxiing operations, and the like. The propulsion system for the aircraft 20 shown in FIG. 2 includes a pair of gas turbine engines 100. In this embodiment, each gas turbine engine 100 is attached to one of the wings 24 by a pylon 28 in an under-wing configuration. Although the gas turbine engines 100 are shown attached to the wing 24 in an under-wing configuration in FIG. 2, in other embodiments, the gas turbine engine 100 may have alternative configurations and be coupled to other portions of the aircraft 20. For example, the gas turbine engine 100 may additionally or alternatively include one or more aspects coupled to other parts of the aircraft 20, such as, for example, the empennage 26, and the fuselage 22.

As will be described further below, with reference to FIG. 2, the gas turbine engines 100 shown in FIG. 1 are gas turbine engines that are each capable of selectively generating a propulsive thrust for the aircraft 20. The amount of propulsive thrust may be controlled at least in part based on a volume of fuel provided to the gas turbine engine 100 via a fuel system 150. An aviation turbine fuel in the embodiments discussed herein is a combustible hydrocarbon liquid fuel, such as a kerosene-type fuel, having a desired carbon number, a synthetic aviation fuel, a biofuel, a biodiesel, an ethanol, a bioalcohol, and the like. The fuel is stored in a fuel tank 151 of the fuel system 150. As shown in FIG. 2, at least a portion of the fuel tank 151 is located in each wing 24 and a portion of the fuel tank 151 is located in the fuselage 22 between the wings 24. The fuel tank 151, however, may be located at other suitable locations in the fuselage 22 or the wing 24. The fuel tank 151 may also be located entirely within the fuselage 22 or the wing 24. The fuel tank 151 may also be separate tanks instead of a single, unitary body, such as, for example, two tanks each located within a corresponding wing 24.

Although the aircraft 20 shown in FIG. 1 is an airplane, the embodiments described herein may also be applicable to other aircraft 20, including, for example, helicopters and unmanned aerial vehicles (UAV). The aircraft discussed herein are fixed-wing aircraft or rotor aircraft that generate lift by aerodynamic forces acting on, for example, a fixed wing (e.g., the wing 24) or a rotary wing (e.g., a rotor of a helicopter), and are heavier-than-air aircraft, as opposed to lighter-than-air aircraft (such as a dirigible). Further, although not depicted herein, in other embodiments, the gas turbine engine may be any other suitable type of gas turbine engine, such as an industrial gas turbine engine incorporated into a power generation system, a nautical gas turbine engine, etc.

FIG. 2 is a schematic, cross-sectional view of one of the gas turbine engines 100 used in the propulsion system for the aircraft 20 shown in FIG. 1. The cross-sectional view of FIG. 2 is taken along line 2-2 in FIG. 1. For the embodiment depicted in FIG. 2, the gas turbine engine 100 is a high bypass gas turbine engine. The gas turbine engine 100 has an axial direction A (extending parallel to a longitudinal centerline axis 101, shown for reference in FIG. 2), a radial direction R, and a circumferential direction. The circumferential direction (not depicted in FIG. 2) extends in a direction rotating about the axial direction A. The gas turbine engine 100 includes a fan section 102 and a turbo-engine 104 disposed downstream from the fan section 102.

The turbo-engine 104 depicted in FIG. 2 includes, in serial flow relationship, a compressor section 103, a combustion section 114, and a turbine section 115. The turbo-engine 104 is substantially enclosed within an outer casing 106 that is substantially tubular and defines a core inlet 108. The core inlet 108 is annular in the depicted embodiment. As schematically shown in FIG. 2, the compressor section 103 includes a booster or a low pressure (LP) compressor 110 followed downstream by a high pressure (HP) compressor 112. The combustion section 114 is downstream of the compressor section 103. The turbine section 115 is downstream of the combustion section 114 and includes a high pressure (HP) turbine 116 followed downstream by a low pressure (LP) turbine 118. The turbo-engine 104 further includes a jet exhaust nozzle section 120 that is downstream of the turbine section 115, a high-pressure (HP) shaft 122 or a spool, and a low-pressure (LP) shaft 124. The HP shaft 122 drivingly connects the HP turbine 116 to the HP compressor 112. The HP turbine 116 and the HP compressor 112 rotate in unison through the HP shaft 122. The LP shaft 124 drivingly connects the LP turbine 118 to the LP compressor 110. The LP turbine 118 and the LP compressor 110 rotate in unison through the LP shaft 124. The compressor section 103, the combustion section 114, the turbine section 115, and the jet exhaust nozzle section 120 together define a core air flow path 121 through which core air 139 flows.

The fan section 102 shown in FIG. 2 includes a fan 126 (e.g., a variable pitch fan) having a plurality of fan blades 178 coupled to a disk 130 in a spaced apart manner. In some embodiments, the fan blade 178 has less than one weight percent metal by total weight of the fan blade 178. When the fan blade 178 has less than one weight percent metal by total weight of the fan blade the weight of the fan blade can be reduced to increase performance of the gas turbine engine 100. As depicted in FIG. 2, the fan blades 178 extend outwardly from the disk 130 generally along the radial direction R. In the case of a variable pitch fan, the plurality of fan blades 178 are rotatable relative to the disk 130 about a pitch axis P by virtue of the fan blades 178 being operatively coupled to an actuation member 131 configured to collectively vary the pitch of the fan blades 178 in unison. This system for adjusting the pitch of the fan blades 178 may include one or more pitch bearings to permit rotation of the fan blades 178 and to change the pitch of the fan blades 178. The fan blades 178, the disk 130, and the actuation member 131 are together rotatable about the longitudinal centerline axis 101 via a fan shaft 133 that is powered by the LP shaft 124 across a power gearbox, also referred to as a gearbox assembly 135. In this way, the fan 126 is drivingly coupled to, and powered by, the turbo-engine 104, and the gas turbine engine 100 is an indirect drive engine. The gearbox assembly 135 may be a reduction gearbox assembly for adjusting the rotational speed of the fan shaft 133 and, thus, the fan 126 relative to the LP shaft 124 when power is transferred from the LP shaft 124 to the fan shaft 133.

Referring still to the exemplary embodiment of FIG. 2, the disk 130 is covered by a fan hub 132 that is aerodynamically contoured to promote an airflow through the plurality of fan blades 178. In addition, the fan section 102 includes an annular fan casing or a nacelle 134 that circumferentially surrounds the fan 126 and at least a portion of the turbo-engine 104. The nacelle 134 is supported relative to the turbo-engine 104 by a plurality of outlet guide vanes 136 that are circumferentially spaced about the nacelle 134 and the turbo-engine 104. Moreover, a downstream section 138 of the nacelle 134 extends over an outer portion of the turbo-engine 104, and, with the outer casing 106, defines a bypass airflow passage 140 therebetween.

During operation of the gas turbine engine 100, a volume of air enters the gas turbine engine 100 through an engine inlet 129 of the nacelle 134 or the fan section 102. As the volume of air passes across the fan blades 178, a first portion of air, also referred to as bypass air 137, is routed into the bypass airflow passage 140, and a second portion of air, also referred to as core air 139, is routed into the upstream section of the core air flow path 121 through the core inlet 108 of the LP compressor 110. The ratio between the bypass air 137 and the core air 139 is commonly known as a bypass ratio. The pressure of the core air 139 is then increased in the compressor section 103 and, more specifically, the LP compressor 110, generating compressed air 141. The compressed air 141 is routed through the HP compressor 112, where the compressed air 141 is further compressed, and into the combustion section 114, where the compressed air 141 is mixed with fuel and ignited to generate combustion gases 143.

The combustion gases 143 are routed into the HP turbine 116 and expanded through the HP turbine 116 where a portion of thermal energy or kinetic energy from the combustion gases 143 is extracted via one or more stages of HP turbine stator vanes and HP turbine rotor blades that are coupled to the HP shaft 122. This causes the HP shaft 122 to rotate, which supports operation of the HP compressor 112 (self-sustaining cycle). In this way, the combustion gases 143 do work on the HP turbine 116. The combustion gases 143 are then routed into the LP turbine 118 and expanded through the LP turbine 118. Here, a second portion of the thermal energy or the kinetic energy is extracted from the combustion gases 143 via one or more stages of LP turbine stator vanes and LP turbine rotor blades that are coupled to the LP shaft 124. This causes the LP shaft 124 to rotate, which supports operation of the LP compressor 110 (self-sustaining cycle) and rotation of the fan 126 via the gearbox assembly 135. In this way, the combustion gases 143 do work on the LP turbine 118.

The combustion gases 143 are subsequently routed through the jet exhaust nozzle section 120 of the turbo-engine 104 to provide propulsive thrust. Simultaneously, the bypass air 137 is routed through the bypass airflow passage 140 before being exhausted from a fan nozzle exhaust section of the gas turbine engine 100, also providing propulsive thrust. The HP turbine 116, the LP turbine 118, and the jet exhaust nozzle section 120 at least partially define a hot gas path for routing the combustion gases 143 through the turbo-engine 104.

The gas turbine engine 100 discussed herein is provided by way of example only. In other embodiments, any other suitable engine may be utilized with aspects of the present disclosure. For example, in other embodiments, the engine may be any other suitable gas turbine engine, such as a turboshaft engine, a turboprop engine, a turbojet engine, an unducted single fan engine, and the like. In such a manner, in other embodiments, the gas turbine engine may have other suitable configurations, such as, direct drive configurations, fixed pitch fans, or other suitable numbers or arrangements of shafts, compressors, turbines, fans, etc. Further, although a particular gas turbine engine 100 is depicted in FIG. 2, the fan blade may be used more generally and/or with other engine embodiments. For example, in alternative embodiments, aspects of the present disclosure may be incorporated into, or otherwise utilized with any other type of engine, such as reciprocating engines, stationary engines, marine engines, etc.

As noted above, various components of the gas turbine engine 100 may be formed from composite materials. These components are referred to herein as composite components. For example, each of the fan blades 178 may include a spar 170 that provides structural support for the fan blade 178. The fan blades 178 and the spar 170 are examples of composite components of the turbine engine 100, and other examples of composite components of the gas turbine engine 100 include HP turbine 116 blades, LP turbine 118 blades, HP compressor 112 blades, and LP compressor 110 blades. These composite components may be made from PMC materials. CMC materials may be used for components, including, for example, outlet guide vanes 136, turbine vanes, and components of the combustion section 114 such as combustor liners used to form a combustion chamber. The spar 170 includes a main body 172 and a root 174. The root 174 engages with the disk 130 and connects the fan blade 178 and, more specifically, the spar 170 to the disk 130. A skin 176 forms the exterior surface of the fan blade 178.

An airfoil, such as the fan blade 178, includes a leading edge, a trailing edge, a root end, and a tip. In this example, when the airfoil is the fan blade 178, the airfoil is connected on the root end to a central support, such as the disk 130, about which the airfoil rotates. The airfoil extends outwardly in a radial direction from the root end to the tip. This direction may also be referred to as the spanwise direction S. The airfoil includes a suction side and a pressure side, and surfaces of the airfoil are formed on each of the suction side and the pressure side between the leading edge and the trailing edge. These surfaces are a suction surface and a pressure surface. The airfoil is a cambered airfoil with the suction surface having a convex curvature and the pressure surface being generally flat. The airfoil may have any suitable shape, however, including, for example, concave surfaces, and the airfoil may be a symmetric airfoil. The suction surface and the pressure surface are positioned on opposite sides of the airfoil such that, when air flows over the suction surface and the pressure surface of the airfoil as the airfoil rotates about a rotation axis, the airfoil generates lift. The airfoil also includes a chordwise direction Ch, perpendicular to the spanwise direction S and extending from the leading edge to the trailing edge. A thickness direction (not shown) of the airfoil is also perpendicular to each of the spanwise direction S and the chordwise direction Ch.

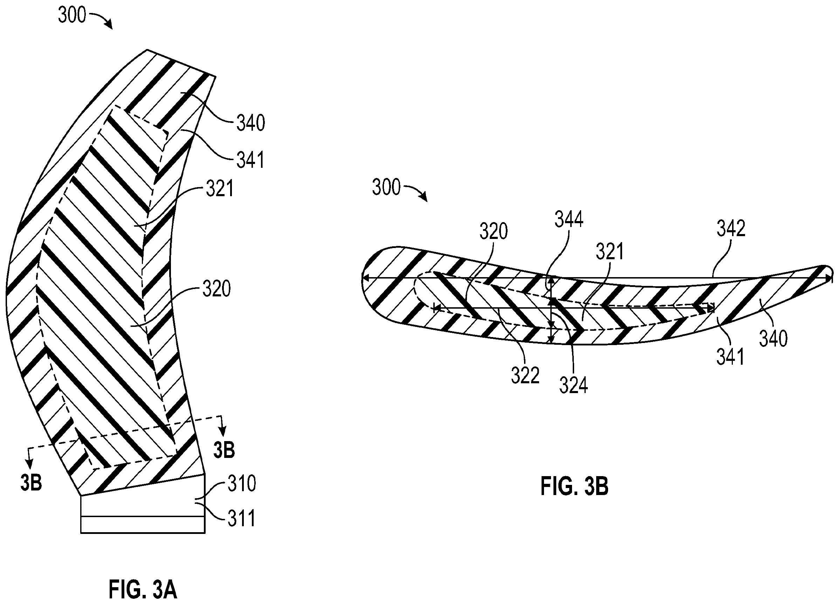

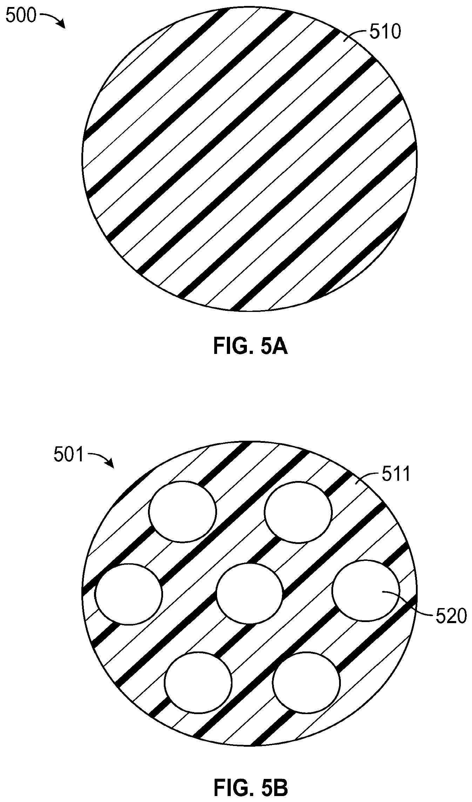

FIG. 3A is a schematic, cross-sectional view of a first airfoil 300 according to an embodiment of the disclosure. The first airfoil 300 is an example of the fan blades 178 (FIG. 2) discussed above. The features of the first airfoil 300 could also be used as, for example, a turbine blade (e.g., in the HP turbine 116 or the LP turbine 118 of FIG. 2) or a compressor blade (e.g., in the LP compressor 110 or the HP compressor 112 of FIG. 2). The first airfoil 300 includes a first airfoil root 310 for attaching the first airfoil 300 to the disk 130 (FIG. 2). The first airfoil root 310 can be a composite component comprised of a matrix material formed around reinforcing fibers, such as reinforcing fibers in the form of reinforcing fiber tows. The first airfoil root 310 or at least a portion thereof, can be formed from a composite and, more specifically, a solid fiber composite 311. The reinforcing fibers of the solid fiber composite 311 include solid reinforcing fibers, as will be discussed further below with reference to FIG. 5A. In some embodiments, the reinforcing fibers are carbon fibers and, more specifically, solid carbon fibers. The solid fiber composite 311 can have, for example, a density ranging from 1.2 grams per cubic centimeter to two grams per cubic centimeter, a tensile modulus ranging from one hundred GPa to two hundred GPa, and a tensile strength ranging from three GPa to seven GPa. Such mechanical properties provide suitable strength and stiffness for anchoring the first airfoil root 310 to the disk 130. In some embodiments, the solid fiber composite 311 of the first airfoil root 310

includes the solid reinforcing fibers arranged in a bundle or a tow, and the bundle or the tow is arranged in a laminated composite, a woven composite, or a braided composite, for example, as discussed below.

The first airfoil 300 includes a first airfoil inner portion 320. The first airfoil inner portion 320 and the first airfoil root 310 form a spar (e.g., the spar 170). In some embodiments, the first airfoil inner portion 320 at least partially surrounding the first airfoil root 310. The first airfoil inner portion 320 or at least a portion thereof, can be formed from a composite and, more specifically, a hollow fiber composite 321. The first airfoil inner portion 320 can be a composite component comprised of a matrix material formed around reinforcing fibers, such as reinforcing fibers in the form of reinforcing fiber tows. As discussed below, the hollow fiber composite 321 can be, for example, a laminated composite, a woven composite, or a braided composite. In some embodiments, the hollow fiber composite 321 of the first airfoil inner portion 320 is a woven composite with each of a warp fiber and a weft fiber including a hollow carbon fiber. The hollow fiber composite 321 includes hollow reinforcing fibers such as those discussed below with reference to FIG. 5B. In some embodiments, the hollow reinforcing fibers are carbon fibers and, more specifically, hollow carbon fibers. As discussed below, the hollow fiber composite 321 can include from one weight percent to ninety-nine weight percent (or any sub range contained therein) of the hollow reinforcing fibers by total weight of the hollow fiber composite 321. The hollow fiber composite 321 can have, for example, a density ranging from one gram per cubic centimeter to 1.5 grams per cubic centimeter, a tensile modulus ranging from one hundred seventy GPa to two hundred fifty GPa, and a tensile strength ranging from two GPa to five GPa. Such mechanical properties provide suitable strength and stiffness for the first airfoil root 310 while also reducing weight of the first airfoil root 310 because of the lower density of the hollow fiber composite 321. The reduced weight can improve the efficiency and the performance of the gas turbine engine 100 (FIG. 2). In some embodiments, the hollow fiber composite 321 of the first airfoil inner portion 320 includes the hollow reinforcing fibers arranged in a bundle or a tow, and the bundle or the tow is arranged in a laminated composite, a woven composite, or a braided composite, for example, as discussed below. In some embodiments, the hollow fiber composite 321 further includes solid reinforcing fibers 500, such as those discussed below with reference to FIG. 5A, in combination with the hollow reinforcing fibers, as will be discussed in more detail below. In some embodiments, the hollow fiber composite 321 includes carbon fiber tows. Each carbon fiber tow can have a mixture of solid carbon fibers and hollow carbon fibers. Each carbon fiber tow can have at least five weight percent of the hollow carbon fibers by total weight of the carbon fiber tow.

The first airfoil 300 includes a first airfoil surface portion 340 at least partially covering a surface of the first airfoil 300. An airfoil surface portion (e.g., the first airfoil surface portion 340) is sometimes referred to as a blade skin (e.g., the skin 176 of FIG. 2). As depicted in FIG. 3A, the first airfoil surface portion 340 at least partially surrounds the first airfoil inner portion 320. The first airfoil surface portion 340 can be a composite component comprised of a matrix material formed around reinforcing fibers, such as reinforcing fibers in the form of reinforcing fiber tows. The first airfoil surface portion 340 or at least a portion thereof, can be formed from a composite and, more specifically, a solid fiber composite 341. The reinforcing fibers of the solid fiber composite 341 include solid reinforcing fibers, as will be discussed further below with reference to FIG. 5A. In some embodiments, the reinforcing fibers are carbon fibers and, more specifically, solid carbon fibers. In some embodiments, the first airfoil surface portion 340 includes a solid fiber composite 341 having solid carbon fibers or a combination of solid carbon fibers and solid glass fibers to form a solid carbon fiber and solid glass fiber composite. The solid fiber composite 341 can have, for example, a density ranging from 1.2 grams per cubic centimeter to three grams per cubic centimeter, a tensile modulus ranging from one hundred GPa to four hundred GPa, and a tensile strength ranging from three GPa to ten GPa. Such mechanical properties provide suitable strength and stiffness to the first airfoil surface portion 340 for providing the first airfoil 300 with a strong and durable surface portion. In some embodiments, the solid fiber composite 341 of the first airfoil surface portion 340 includes the solid reinforcing fibers arranged in a bundle or a tow, and the bundle or the tow is arranged in a laminated composite, a woven composite, or a braided composite, for example, as discussed below. In some embodiments, the hollow fiber composite 321 has less than one weight percent metal by total weight of the hollow fiber composite 321 and the solid fiber composite 341 has less than one weight percent metal by total weight of the solid fiber composite 341. Having less than one weight percent of metal in the hollow fiber composite 321 and the solid fiber composite 341 can reduce weight of the first airfoil 300 and improve performance.

The inventors unexpectedly discovered that the performance of the gas turbine engine 100 could be improved by tailoring the relative material properties of the first airfoil root 310, the first airfoil inner portion 320, and the first airfoil surface portion 340. For example, the gas turbine engine 100 has improved efficiency and the first airfoil 300 has suitable mechanical properties when the first airfoil inner portion 320 is less dense than the first airfoil surface portion 340 and the first airfoil surface portion 340 is less dense than the first airfoil root 310. Similarly, for example, the gas turbine engine 100 has improved efficiency and the first airfoil 300 has suitable mechanical properties when the first airfoil inner portion 320 has a lower tensile strength than the first airfoil surface portion 340 and the first airfoil surface portion 340 has a lower tensile strength than the first airfoil root 310. Tailoring the relative material properties can be achieved, in some embodiments, by the arrangement of the composites within the first airfoil 300, particularly, the placement of the hollow reinforcing fibers and the solid reinforcing fibers as discussed herein.

FIG. 3B is a schematic, cross-sectional view of the first airfoil 300 depicted in FIG. 3A. The cross-sectional view of FIG. 3B is taken along line 3B-3B in FIG. 3A. As depicted in FIG. 3B, the first airfoil inner portion 320 has a first airfoil inner portion width 322 and a first airfoil inner portion thickness 324. Similarly, the first airfoil 300 has a first airfoil cross section width 342 and a first airfoil cross section thickness 344. The first airfoil inner portion thickness 324 and the first airfoil cross section thickness 344 are measured along coinciding lines. The inventors unexpectedly discovered that the performance of the gas turbine engine 100 (FIG. 2) could be improved by tailoring the ratio of the first airfoil inner portion thickness 324 and the first airfoil cross section thickness 344 while maintaining suitable mechanical properties of the first airfoil 300. For example, in some embodiments, the first airfoil inner portion thickness 324 has a length ranging from 0.25 to 0.9 times a length of the first airfoil cross section thickness 344. When the first airfoil inner portion thickness 324 and the first airfoil cross section thickness 344 satisfy this relationship, weight of the first airfoil 300 is reduced while maintaining suitable mechanical properties of the first airfoil 300.

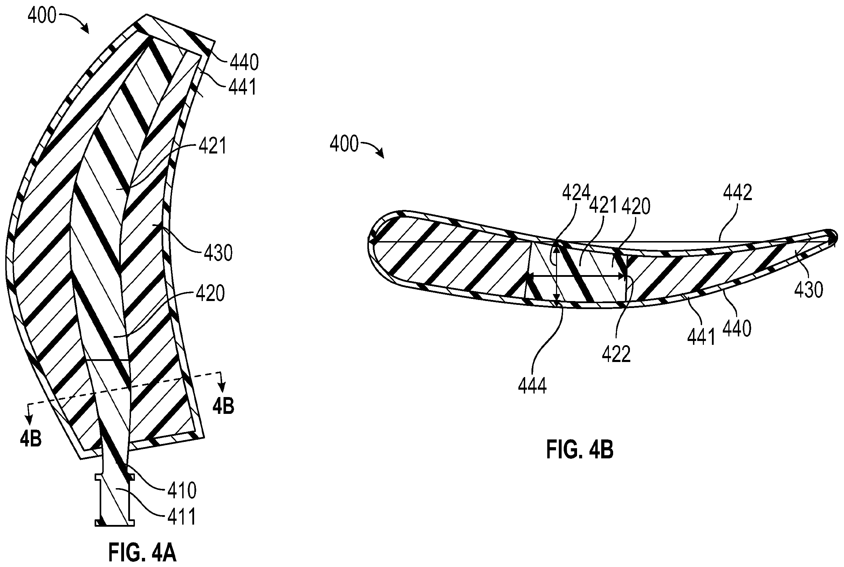

FIG. 4A is a schematic view of a second airfoil 400 according to an embodiment of the disclosure. The second airfoil 400 is an example of the fan blades 178 (FIG. 2) discussed above. The features of the second airfoil 400 could also be used as, for example, a turbine blade (e.g., in the HP turbine 116 or the LP turbine 118 of FIG. 2) or a compressor blade (e.g., in the LP compressor 110 or the HP compressor 112 of FIG. 2). Several features of FIGS. 4A and 4B are shown and labeled with reference numerals, but not explicitly described herein. Elements of FIGS. 4A and 4B with reference numerals in the 400-series, but not described below, are identical to those corresponding elements in FIGS. 3A and 3B, with otherwise identical reference numerals in the 300-series. Moreover, each of the 400-series elements can have the same properties and features as the corresponding 300-series elements unless stated otherwise.

The second airfoil 400 includes a second airfoil root 410 for attaching the second airfoil 400 to the disk 130 (FIG. 2), a second airfoil inner portion 420, and a second airfoil surface portion 440 at least partially covering a surface of the second airfoil 400. The second airfoil inner portion 420 and the second airfoil root 410 form a spar (e.g., the spar 170 (FIG. 2)). In some embodiments, the second airfoil inner portion 420 at least partially surrounds the second airfoil root 410. An airfoil surface portion (e.g., the second airfoil surface portion 440) is sometimes referred to as a blade skin (e.g., the skin 176). Additionally, the second airfoil 400 includes a second airfoil middle portion 430. The second airfoil middle portion 430 at least partially surrounds the second airfoil inner portion 420. The second airfoil middle portion 430 is at least partially surrounded by the second airfoil surface portion 440. The second airfoil middle portion 430 includes a foam such as, for example, a polymer foam (e.g., a polyurethane foam) or a metal foam (e.g., an aluminum metal foam).

The second airfoil middle portion 430 can improve performance of the gas turbine engine 100 (FIG. 2) by, for example, reducing weight of the second airfoil 400 while maintaining suitable mechanical properties. For example, in some embodiments, the second airfoil middle portion 430 is less dense than the second airfoil inner portion 420, the second airfoil inner portion 420 is less dense than the second airfoil surface portion 440, and the second airfoil surface portion 440 is less dense than the second airfoil root 410. Additionally, in some embodiments, the second airfoil middle portion 430 has a lower tensile strength than the second airfoil inner portion 420, the second airfoil inner portion 420 has a lower tensile strength than the second airfoil surface portion 440, and the second airfoil surface portion 440 has a lower tensile strength than the second airfoil root 410. When the second airfoil 400 satisfies any of the above conditions, the second airfoil 400 has a reduced weight while maintaining suitable mechanical properties of the second airfoil 400. Thus, the second airfoil 400 can improve performance of the gas turbine engine 100 by, for example, reducing weight of the second airfoil 400 while maintaining suitable mechanical properties.

FIG. 4B is a schematic, cross-sectional view of the second airfoil depicted in FIG. 4A. The cross-sectional view of FIG. 4B is taken along line 4B-4B in FIG. 4A. As depicted in FIG. 4B, the second airfoil inner portion 420 has a second airfoil inner portion width 422 and a second airfoil inner portion thickness 424. Similarly, the second airfoil 400 has a second airfoil cross section width 442 and a second airfoil cross section thickness 444. The second airfoil inner portion thickness 424 and the second airfoil cross section thickness 444 are measured along coinciding lines. It was unexpectedly discovered that the performance of the gas turbine engine 100 (FIG. 2) could be improved by tailoring the ratio of the second airfoil inner portion thickness 424 and the second airfoil cross section thickness 444 while maintaining suitable mechanical properties of the second airfoil 400. For example, in some embodiments, the second airfoil inner portion thickness 424 has a length ranging from 0.25 to 0.9 times a length of the second airfoil cross section thickness 444. When the second airfoil inner portion thickness 424 and the second airfoil cross section thickness 444 satisfy this relationship, weight of the second airfoil 400 is reduced while maintaining suitable mechanical properties of the second airfoil 400.

FIG. 5A is a schematic, cross sectional view of a solid reinforcing fiber 500 according to an embodiment of the disclosure. The solid reinforcing fiber can be used as the solid reinforcing fibers of the solid fiber composites discussed above. The solid reinforcing fiber 500 has a solid cross section 510. The solid reinforcing fiber 500 can be included in the solid fiber composite of the first airfoil root 310 (FIG. 3A) or the solid fiber composite of the second airfoil root 410 (FIG. 4A). For example, the solid reinforcing fiber 500 can be included in a laminated structure, a woven structure, or a braided structure as described below. The solid reinforcing fiber 500 can be included in the hollow fiber composite of the first airfoil inner portion 320 (FIG. 3A) or the hollow fiber composite of the second airfoil inner portion 420 (FIG. 4A). The solid reinforcing fiber 500 can be included in the solid fiber composite of the first airfoil surface portion 340 (FIG. 3A) or the solid fiber composite of the second airfoil surface portion 440 (FIG. 4A). The solid reinforcing fiber 500 can have, for example, a density ranging from 1.2 grams per cubic centimeter to two grams per cubic centimeter, a tensile modulus ranging from one hundred GPa to two hundred GPa, and a tensile strength ranging from three GPa to seven GPa. Such mechanical properties confer suitable strength and stiffness to composites that include the solid reinforcing fiber 500. In some embodiments, the solid reinforcing fiber is a solid carbon fiber or a solid glass fiber.

FIG. 5B is a schematic, cross sectional view of a hollow reinforcing fiber 501 according to an embodiment of the disclosure. The hollow reinforcing fiber can be used as the hollow reinforcing fibers of the hollow fiber composites discussed above. The hollow reinforcing fiber 501 has a solid cross section portion 511 and one or more channels 520 (e.g., from one to ten channels 520). The embodiment depicted in FIG. 5B has seven channels 520. The channels 520 reduce the density of the hollow reinforcing fiber 501 as compared to the solid reinforcing fiber 500 (FIG. 5A). The reduced density of the hollow reinforcing fiber 501 can be used to improve the efficiency of the gas turbine engine 100 (FIG. 2) by reducing weight of, e.g., the first airfoil 300 (FIG. 3A) or the second airfoil 400 (FIG. 4A). The hollow reinforcing fiber 501 can have, for example, a density ranging from one gram per cubic centimeter to 1.5 grams per cubic centimeter, a tensile modulus ranging from one hundred seventy GPa to two hundred fifty GPa, and a tensile strength ranging from two GPa to five GPa. Such mechanical properties provide suitable strength and stiffness to composites that include the hollow reinforcing fiber 501 while also reducing weight of the composites because of the lower density of the hollow reinforcing fiber 501. In some embodiments, the hollow reinforcing fiber 501 is a hollow carbon fiber.

As discussed above, the first airfoil inner portion 320 (FIG. 3A) and the second airfoil inner portion 420 (FIG. 4A) include the hollow fiber composite. The hollow fiber composite can include hollow reinforcing fibers 501 and, in some embodiments, the hollow fiber composite further includes solid reinforcing fibers 500 (FIG. 5A). A ratio of the hollow reinforcing fibers 501 to the solid reinforcing fibers 500 in the hollow fiber composite can be tailored to improve the efficiency of the gas turbine engine 100. For example, the hollow fiber composite can include from one weight percent to ninety-nine weight percent (or any sub range contained therein) of the hollow reinforcing fiber 501 (e.g., hollow carbon fiber) by total weight of the hollow fiber composite. Increasing the weight percent of the hollow reinforcing fiber 501 reduces the weight of the hollow fiber composite to improve efficiency of the gas turbine engine 100. This, however, must be balanced by maintaining suitable mechanical properties of the first airfoil 300 and the second airfoil 400. Similarly, the hollow fiber composite can include from one weight percent to ninety-nine weight percent (or any sub range contained therein) of the solid reinforcing fiber 500 (e.g., solid carbon fiber) by total weight of the hollow fiber composite. Reducing the weight percent of the solid reinforcing fiber 500 reduces the weight of the hollow fiber composite to improve efficiency of the gas turbine engine 100. This must, however, be balanced by maintaining suitable mechanical properties of the first airfoil 300 and the second airfoil 400. In some embodiments, the hollow fiber composite includes carbon fiber tows. Each carbon fiber tow has a mixture of solid carbon fibers and hollow carbon fibers. For example, in some embodiments, each carbon fiber tow has at least five weight percent (e.g., from five weight percent to ninety-nine weight percent or any subrange contained therein) of the hollow carbon fibers by total weight of the carbon fiber tow. Carbon fiber tows can be included in the hollow fiber composite to reduce the weight of the first airfoil 300 and the second airfoil 400, while maintaining suitable mechanical properties. For example, the hollow fiber composite can include at least five weight percent, at least ten weight percent, at least twenty weight percent, at least thirty weight percent, or at least forty weight percent, of the hollow reinforcing fiber 501 by total weight of the hollow fiber composite.

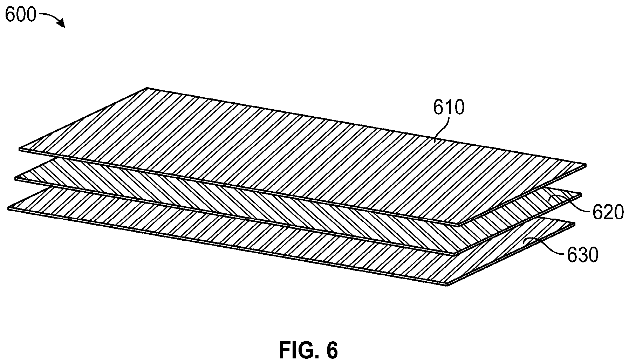

FIG. 6 is a schematic view of a laminated composite 600 according to an embodiment of the disclosure. The laminated composite 600 includes a plurality of plies (e.g., a first ply 610, a second ply 620, and a third ply 630). The plurality of plies can include the solid reinforcing fiber 500 (FIG. 5A), the hollow reinforcing fiber 501 (FIG. 5B), or both. As discussed above, the plurality of plies is laid up to form a preform, impregnated with a matrix material, as applicable, and then cured to form the laminated composite 600. In some embodiments, the hollow fiber composite 321 of the first airfoil inner portion 320 (FIG. 3A) or the hollow fiber composite 421 the second airfoil inner portion 420 (FIG. 4A) is a laminated composite (e.g., the laminated composite 600) with at least one ply including the hollow carbon fiber.

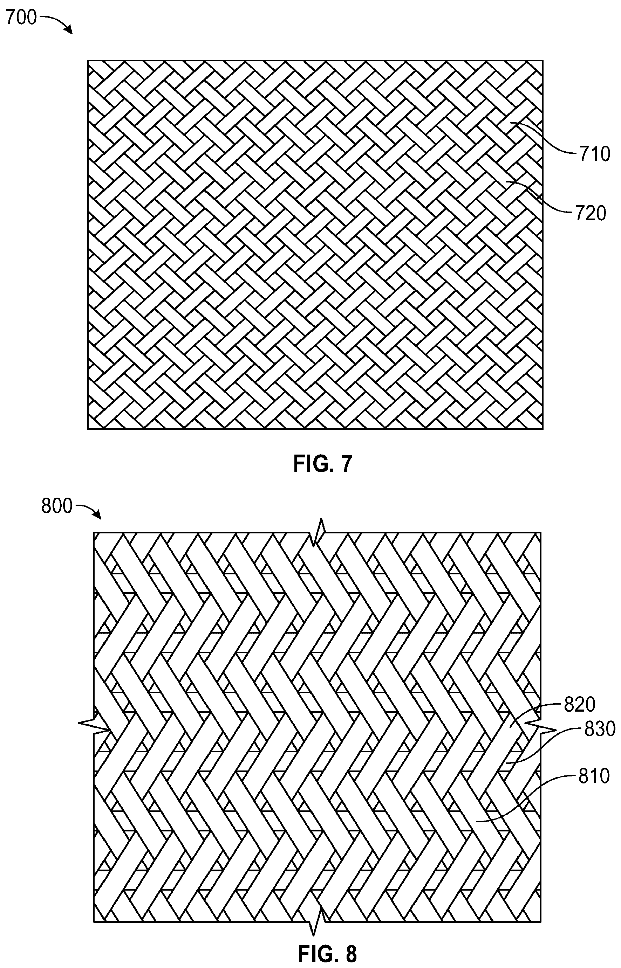

FIG. 7 is a schematic view of a woven composite 700 according to an embodiment of the disclosure. In some embodiments, the woven composite 700 includes a plurality of two-dimensional (2D) woven layers that are laid up as plies to form a laminated composite, such as the laminated composite 600 (FIG. 6). The woven composite 700 includes warp fibers 710 and weft fibers 720. The warp fibers 710 and the weft fibers 720 can each independently include the solid reinforcing fiber 500 (FIG. 5A), the hollow reinforcing fiber 501(FIG. 5B), or both, optionally, in the form of tows. The warp fibers 710 and the weft fibers 720 can each independently include the solid reinforcing fiber 500, the hollow reinforcing fiber 501, or both embedded in a resin such as, for example, an epoxy resin. The resin can help hold the warp fibers 710 and the weft fibers 720 together in the woven composite 700. In some embodiments, the first airfoil inner portion 320 (FIG. 3A) or the second airfoil inner portion 420 (FIG. 4A) is a woven composite 700 with at least one of the warp fibers 710 or the weft fibers 720 including the hollow fiber composite. Alternatively, the woven composite can be a three-dimensional (3D) woven composite having warp fibers, weft fibers, and z-direction fibers, any of which can independently include the solid reinforcing fiber 500, the hollow reinforcing fiber 501, or both. In some embodiments, the woven composite includes a plurality of 2D woven layers. In some embodiments, woven composite is a three-dimensional (3D) woven composite.

FIG. 8 is a schematic view of a braided composite 800 according to an embodiment of the disclosure. The braided composite depicted in FIG. 8 has a tri-axial braided structure; however, other braided structures can be used. The braided composite 800 includes a plurality of strands (e.g., a first strand 810, a second strand 820, and a third strand 830). For example, each of the plurality of strands (e.g., the first strand 810, the second strand 820, and the third strand 830) can independently include the solid reinforcing fiber 500 (FIG. 5A), the hollow reinforcing fiber 501 (FIG. 5B), or both. In some embodiments, each of the plurality of strands (e.g., the first strand 810, the second strand 820, and the third strand 830) can independently include the solid reinforcing fiber 500, the hollow reinforcing fiber 501, or both, embedded in a resin such as, for example, an epoxy resin. The resin can help hold the plurality of strands together in the braided composite 800. The braided composite 800 can be used to form an airfoil, or a portion thereof, by using a lay-up process such as those lay-up processes described above. For example, the braided composite 800 can be used to form one or more of the first airfoil inner portion 320 (FIG. 3A), the second airfoil inner portion 420 (FIG. 4A), the first airfoil surface portion 340 (FIG. 3A), or the second airfoil surface portion 440 (FIG. 4A). In some embodiments, the hollow fiber composite 321 of the first airfoil inner portion 320 or the hollow fiber composite 421 of the second airfoil inner portion 420 is a braided composite (e.g., the braided composite 800) with at least one strand including the hollow carbon fiber.

The laminated composite 600 (FIG. 6), the woven composite 700 (FIG. 7), and the braided composite 800 (FIG. 8) have different properties that can be used to improve the gas turbine engine 100 (FIG. 2). For example, the laminated composite 600 can be more efficiently manufactured than the woven composite 700 and the braided composite 800. The woven composite 700 may be more cohesive than the laminated composite 600 due to the woven composite 700 having the interwoven warp fibers 710 (FIG. 7) and weft fibers 720 (FIG. 7). Similarly, the braided composite 800 may be more cohesive than the woven composite 700 due to the braided composite 800 having the braided strands (e.g., the first strand 810, the second strand 820, and the third strand 830 of FIG. 8). Including the laminated composite 600, the woven composite 700, or the braided composite 800 in the first airfoil inner portion 320 and the second airfoil inner portion 420 increases performance of the gas turbine engine 100 by, for example, decreasing weight of the first airfoil 300 (FIG. 3A) and the second airfoil 400 (FIG. 4A) while maintaining suitable mechanical properties.

As discussed above, the inventors unexpectedly discovered that airfoils (e.g., fan blades) including an inner portion including a hollow fiber composite, and a surface portion including a solid carbon fiber or a solid carbon fiber and a solid glass fiber composite have robust mechanical properties suitable for use in gas turbine engines, while also providing enhanced efficiency as compared to other airfoils lacking, e.g., the inner portion including the hollow fiber composite.

Further aspects of the present disclosure are provided by the subject matter of the following clauses.

An airfoil for a gas turbine engine, the airfoil including an inner portion including a hollow fiber composite, and a surface portion at least partially surrounding the inner portion, the surface portion including a solid fiber composite.

The airfoil of the preceding clause, such that the hollow fiber composite of the inner portion is a woven composite with at least one of a warp fiber or a weft fiber including a hollow carbon fiber.

The airfoil of any preceding clause, such that the hollow fiber composite of the inner portion is a braided composite with at least one strand including a hollow carbon fiber.

The airfoil of any preceding clause, such that the hollow fiber composite includes hollow carbon fibers having a density ranging from one gram per cubic centimeter to 1.5 grams per cubic centimeter.

The airfoil of any preceding clause, such that the hollow fiber composite includes hollow carbon fibers having a tensile modulus ranging from one hundred seventy GPa to two hundred fifty GPa.

The airfoil of any preceding clause, such that the hollow fiber composite includes hollow carbon fibers having a tensile strength ranging from two GPa to five GPa.

The airfoil of any preceding clause, such that the hollow fiber composite includes hollow carbon fibers having a cross section with one to ten channels.

The airfoil of any preceding clause, such that the airfoil has a cross section with an airfoil cross section width and an airfoil cross section thickness, and the inner portion has a cross section with an inner portion thickness, the airfoil inner portion thickness and the first airfoil cross section thickness being measured along coinciding lines, to the airfoil cross section thickness and the inner portion thickness has a length ranging from 0.25 to 0.9 times a length of the airfoil cross section thickness.

The airfoil of any preceding clause, further comprising an airfoil root including a solid fiber composite, the inner portion at least partially surrounding the airfoil root, wherein the inner portion is less dense than the surface portion and the surface portion is less dense than the airfoil root.

The airfoil of any preceding clause, further including a middle portion at least partially surrounding the inner portion and at least partially surrounded by the surface portion, and an airfoil root including a solid fiber composite, the middle portion at least partially surrounding the airfoil root, such that the middle portion is less dense than the inner portion, the inner portion is less dense than the surface portion, and the surface portion is less dense than the airfoil root.

The airfoil of any preceding clause, further such that an airfoil root including a solid fiber composite, the inner portion at least partially surrounding the airfoil root, wherein the inner portion has a lower tensile strength than the surface portion and the surface portion has a lower tensile strength than the airfoil root.

The airfoil of any preceding clause, further including a middle portion at least partially surrounding the inner portion and at least partially surrounded by the surface portion, and an airfoil root including a solid fiber composite at least partially surrounded by the middle portion, such that the middle portion has a lower tensile strength than the inner portion, the inner portion has a lower tensile strength than the surface portion, and the surface portion has a lower tensile strength than the airfoil root.

The airfoil of any preceding clause, such that the inner portion is a laminated composite having a plurality of plies and each ply includes hollow reinforcing fibers.

The airfoil of any preceding clause, further including a middle portion at least partially surrounding the inner portion and at least partially surrounded by the surface portion, wherein the middle portion includes a foam and the inner portion is a laminated composite having a plurality of plies, each ply including hollow reinforcing fibers.

The airfoil of any preceding clause, such that the hollow fiber composite has less than one weight percent metal by total weight of the hollow fiber composite and the solid fiber composite has less than one weight percent metal by total weight of the solid fiber composite.

The airfoil of any preceding clause, further including a middle portion at least partially surrounding the inner portion and at least partially surrounded by the surface portion, the middle portion including a foam.

The airfoil of any preceding clause, such that the middle portion includes a polyurethane foam or a metal foam.

The airfoil of any preceding clause, such that the hollow fiber composite of the inner portion is a laminated composite with at least one ply including a hollow carbon fiber.

The airfoil of any preceding clause, such that the hollow fiber composite of the inner portion is a woven composite with each of a warp fiber and a weft fiber including a hollow carbon fiber.

The airfoil of any preceding clause, such that the woven composite includes a plurality of two-dimensional (2D) woven layers.

The airfoil of any preceding clause, such that woven composite is a three-dimensional (3D) woven composite.

The airfoil of any preceding clause, such that the hollow fiber composite includes carbon fiber tows, each carbon fiber tow having a mixture of solid carbon fibers and hollow carbon fibers, and each carbon fiber tow has at least five weight percent of the hollow carbon fibers by total weight of the carbon fiber tow.

The airfoil of any preceding clause, such that the hollow fiber composite includes at least five weight percent of the hollow reinforcing fiber by total weight of the hollow fiber composite.

The airfoil of any preceding clause, such that the hollow fiber composite includes at least ten weight percent of the hollow reinforcing fiber by total weight of the hollow fiber composite.

The airfoil of any preceding clause, such that the hollow fiber composite includes at least twenty weight percent of the hollow reinforcing fiber by total weight of the hollow fiber composite.

The airfoil of any preceding clause, such that the hollow fiber composite includes at least thirty weight percent of the hollow reinforcing fiber by total weight of the hollow fiber composite.

The airfoil of any preceding clause, such that the hollow fiber composite includes or at least forty weight percent of the hollow reinforcing fiber by total weight of the hollow fiber composite.

A gas turbine engine including the airfoil of any preceding clause.

A gas turbine engine including a fan section and a turbo-engine disposed downstream from the fan section, the fan section has a plurality of fan blades coupled to a disk in a spaced apart manner, and each of the fan blades include an airfoil having an inner portion including a hollow fiber composite, and a surface portion at least partially surrounding the inner portion, the surface portion including a solid fiber composite.

The gas turbine engine of the preceding clause, such that the inner portion is a woven composite with at least one of a warp fiber or a weft fiber including the hollow fiber composite.

The gas turbine engine of any preceding clause, such that the inner portion is a braided composite with at least one strand including the hollow fiber composite.

The gas turbine engine of any preceding clause, such that the hollow fiber composite includes hollow carbon fibers having a density ranging from one gram per cubic centimeter to 1.5 grams per cubic centimeter.

The gas turbine engine of any preceding clause, such that the hollow fiber composite includes hollow carbon fibers having a tensile modulus ranging from one hundred seventy GPa to two hundred fifty GPa.

The gas turbine engine of any preceding clause, such that the hollow fiber composite includes hollow carbon fibers having a tensile strength ranging from two GPa to five GPa.

The gas turbine engine of any preceding clause, such that the hollow fiber composite includes hollow carbon fibers having a cross section with one to ten channels.

The gas turbine engine of any preceding clause, such that the airfoil has a cross section with an airfoil cross section width and an airfoil cross section thickness, and the inner portion has a cross section with an inner portion thickness, the airfoil inner portion thickness and the first airfoil cross section thickness being measured along coinciding lines, to the airfoil cross section thickness and the inner portion thickness has a length ranging from 0.25 to 0.9 times a length of the airfoil cross section thickness.

The gas turbine engine of any preceding clause, further comprising an airfoil root including a solid fiber composite, the inner portion at least partially surrounding the airfoil root, wherein the inner portion is less dense than the surface portion and the surface portion is less dense than the airfoil root.

The gas turbine engine of any preceding clause, further including a middle portion at least partially surrounding the inner portion and at least partially surrounded by the surface portion, and an airfoil root including a solid fiber composite, the middle portion at least partially surrounding the airfoil root, such that the middle portion is less dense than the inner portion, the inner portion is less dense than the surface portion, and the surface portion is less dense than the airfoil root.

The gas turbine engine of any preceding clause, further such that an airfoil root including a solid fiber composite, the inner portion at least partially surrounding the airfoil root, wherein the inner portion has a lower tensile strength than the surface portion and the surface portion has a lower tensile strength than the airfoil root.

The gas turbine engine of any preceding clause, further including a middle portion at least partially surrounding the inner portion and at least partially surrounded by the surface portion, and an airfoil root including a solid fiber composite at least partially surrounded by the middle portion, such that the middle portion has a lower tensile strength than the inner portion, the inner portion has a lower tensile strength than the surface portion, and the surface portion has a lower tensile strength than the airfoil root.

The gas turbine engine of any preceding clause, such that the inner portion is a laminated composite having a plurality of plies and each ply includes hollow reinforcing fibers.

The gas turbine engine of any preceding clause, further including a middle portion at least partially surrounding the inner portion and at least partially surrounded by the surface portion, wherein the middle portion includes a foam and the inner portion is a laminated composite having a plurality of plies, each ply including hollow reinforcing fibers.

The gas turbine engine of any preceding clause, such that the hollow fiber composite has less than one weight percent metal by total weight of the hollow fiber composite and the solid fiber composite has less than one weight percent metal by total weight of the solid fiber composite.

The gas turbine engine of any preceding clause, further including a middle portion at least partially surrounding the inner portion and at least partially surrounded by the surface portion, the middle portion including a foam.

The gas turbine engine of any preceding clause, such that the middle portion includes a polyurethane foam or a metal foam.

The gas turbine engine of any preceding clause, such that the hollow fiber composite the inner portion is a laminated composite with at least one ply including a hollow carbon fiber.

The gas turbine engine of any preceding clause, such that the hollow fiber composite of the inner portion is a laminated composite with at least one ply including hollow reinforcing fibers.

The gas turbine engine of any preceding clause, such that the woven composite includes a plurality of two-dimensional (2D) woven layers.

The gas turbine engine of any preceding clause, such that woven composite is a three-dimensional (3D) woven composite.

The gas turbine engine of any preceding clause, such that the hollow fiber composite includes carbon fiber tows, each carbon fiber tow having a mixture of solid carbon fibers and hollow carbon fibers, and each carbon fiber tow has at least five weight percent of the hollow carbon fibers by total weight of the carbon fiber tow

The gas turbine engine of any preceding clause, such that the hollow fiber composite includes at least 5 weight percent of the hollow reinforcing fiber by total weight of the hollow fiber composite.

The gas turbine engine of any preceding clause, such that the hollow fiber composite includes at least 10 weight percent of the hollow reinforcing fiber by total weight of the hollow fiber composite.

The gas turbine engine of any preceding clause, such that the hollow fiber composite includes at least 20 weight percent of the hollow reinforcing fiber by total weight of the hollow fiber composite.

The gas turbine engine of any preceding clause, such that the hollow fiber composite includes at least 30 weight percent of the hollow reinforcing fiber by total weight of the hollow fiber composite.

The gas turbine engine of any preceding clause, such that the hollow fiber composite includes or at least 40 weight percent of the hollow reinforcing fiber by total weight of the hollow fiber composite.

Although the foregoing description is directed to some exemplary embodiments of the present disclosure, other variations and modifications will be apparent to those skilled in the art, and may be made without departing from the present disclosure. Moreover, features described in connection with one embodiment of the present disclosure may be used in conjunction with other embodiments, even if not explicitly stated above.

## Claims

1. An airfoil (300, 400) for a gas turbine engine (100), the airfoil (300, 400) comprising:
an inner portion (320, 420) including a hollow fiber composite; and
a surface portion (340, 440) at least partially surrounding the inner portion (320, 420), the surface portion (340, 440) including a solid fiber composite.

2. The airfoil (400) of claim 1, further comprising a middle portion (430) at least partially surrounding the inner portion (420) and at least partially surrounded by the surface portion (440), the middle portion (430) including a foam.

3. The airfoil (300, 400) of any one of claims 1 or 2, wherein the inner portion (320, 420) is a laminated composite (600) with at least one ply including a hollow fiber composite, the inner portion (320, 420) is a woven composite (700) with at least one of a warp fiber (710) or a weft fiber (720) including the hollow fiber composite, the inner portion (320, 420) is a braided composite (800) with at least one strand including the hollow fiber composite, or the inner portion (320, 420) is a laminated composite (600) having a plurality of plies and each ply includes hollow reinforcing fibers.

4. The airfoil (300, 400) of any of claims 1 or 2, wherein the inner portion (320, 420) is a laminated composite (600) with at least one ply including hollow reinforcing fibers embedded in an epoxy resin.

5. The airfoil (300, 400) of any preceding claim, wherein the hollow fiber composite includes hollow carbon fibers having a density ranging from one gram per cubic centimeter to 1.5 grams per cubic centimeter, the hollow fiber composite includes hollow carbon fibers having a tensile modulus ranging from one hundred seventy GPa to two hundred fifty GPa, or the hollow fiber composite includes hollow carbon fibers having a tensile strength ranging from two GPa to five GPa.

6. The airfoil (300, 400) of any preceding claim, wherein the hollow fiber composite includes hollow carbon fibers having a cross section with one to ten channels.

7. The airfoil (300, 400) of any preceding claim, wherein the airfoil (300, 400) has a cross section with an airfoil cross section width (342, 442) and an airfoil cross section thickness (342, 442), and the inner portion (320, 420) has a cross section with an inner portion thickness (324, 424) parallel to the airfoil cross section thickness (342, 442) and the inner portion thickness (324, 424) has a length ranging from 0.25 to 0.9 times a length of the airfoil cross section thickness (342, 442).

8. The airfoil (400) of any preceding claim, further comprising a middle portion (430) at least partially surrounding the inner portion (420) and at least partially surrounded by the surface portion (440), the middle portion (430) including a polyurethane foam or a metal foam.

9. The airfoil (300, 400) of any preceding claim, further comprising an airfoil root (310, 410) including a solid fiber composite, the inner portion at least partially surrounding the airfoil root (310, 410), wherein the inner portion (320, 420) is less dense than the surface portion (340, 440) and the surface portion (340, 440) is less dense than the airfoil root (310, 410).

10. The airfoil (400) of any preceding claim, further comprising:
a middle portion (430) at least partially surrounding the inner portion (420) and at least partially surrounded by the surface portion (440); and
an airfoil root (410) including a solid fiber composite, the middle portion (430) at least partially surrounding the airfoil root (410),
wherein the middle portion (430) is less dense than the inner portion (420), the inner portion (420) is less dense than the surface portion (440), and the surface portion (440) is less dense than the airfoil root (410).

11. The airfoil (300, 400) of any preceding claim, further comprising an airfoil root (310, 410) including a solid fiber composite, the inner portion (320, 420) at least partially surrounding the airfoil root (310, 410), wherein the inner portion (320, 420) has a lower tensile strength than the surface portion (340, 440) and the surface portion (340, 440) has a lower tensile strength than the airfoil root (310, 410).

12. The airfoil (400) of any preceding claim, further comprising:
a middle portion (430) at least partially surrounding the inner portion (420) and at least partially surrounded by the surface portion (440); and
an airfoil root (410) including a solid fiber composite at least partially surrounded by the middle portion (430),
wherein the middle portion (430) has a lower tensile strength than the inner portion (420), the inner portion (420) has a lower tensile strength than the surface portion (440), and the surface portion (440) has a lower tensile strength than the airfoil root (410).

13. The airfoil (400) of any preceding claim, further comprising a middle portion (430) at least partially surrounding the inner portion (420) and at least partially surrounded by the surface portion (440), wherein the middle portion (430) includes a foam and the inner portion (420) is a laminated composite (600) having a plurality of plies, each ply including hollow reinforcing fibers.

14. The airfoil (300, 400) of any preceding claim, wherein the airfoil (300, 400) has less than one weight percent metal by total weight of the airfoil.

15. A gas turbine engine (100) comprising the airfoil (300, 400) of any preceding claim.
